# EUROPEAN PATENT APPLICATION

(11) **EP 1 483 999 A1**
(43) Date of publication of application: **08.12.2004**
(21) Application number: 03025036.9
(22) Date of filing: 30.10.2003
(51) Int. Cl.: A47J 43/25, A47J 43/28

(54) **Tool having quick attach system for replacing the working element**

(30) Priority: 04.06.2003 US 454072
(71) Applicant: Grace Manufacturing Inc., Russellville, Arkansas 72801 (US)
(72) Inventor: Grace, Richard, Dover Akansas 72837 (US); Grace, Jeff, Dover Arkansas 72837 (US); Mason, Randall, Rogers Arkansas 72756 (US)
(74) Representative: Ebner von Eschenbach, Jennifer

(57) **Abstract**

A tool (10) having an exceptionally sharp replaceable working element (21), in which the edges (30) of the working element are protected by elongated rods (32), and a handle (12) for the tool having parallel slots (27) therein and the rods (32) being wedged in the slots (27) to hold the working element (21) firmly in place during use.

## Description

### BACKGROUND OF THE INVENTION

### Field of the Invention

In times of relative prosperity, the concept of planned obsolescence did not meet with significant consumer resistance. As a consequence, many manufacturers felt that it was practical to mold, or otherwise form, a tool with its handle, knowing full well that the tools' working element such as, for example, a blade, or like device, for the removal of material, tend to wear to the extent that they are no longer useable for the purpose intended. The consumer would simply buy a replacement and the cycle would repeat itself.

As costs of manufacture escalated, the cost to consumers increased accordingly in order that a satisfactory profit margin could be maintained, and those increases inevitably reached levels in some areas where such products began to meet consumer resistance, and that trend continues today.

The concept of providing for the replacement of working elements of a tool in a reusable handle is not new. It, however, is reaching substantial acceptance in those products such as sharpened instruments, where the working element wears substantially, and it has become more efficient to build a durable handling device which can receive replaceable working elements, thereby extending the useful life of the tool.

This concept has become particularly relevant to Grace Manufacturing Inc. with respect to their Microplane® line of kitchen utensils and woodworking products.

### Overview of the Related Art

There are several examples of the use of replaceable working elements of a tool in a reusable handle, virtually all of which are focused on a particular tool for a specific purpose.

One of the earliest examples found is Kniffen patent number 990,748, which is directed to a wooden spatula with a steel handle. Apparently, at the time, spatulas made of steel were being destroyed by chemicals with which the working element of the spatula came into contact. It was Kniffen's idea to make the working element of wood and removably attach it to a steel handle, which was formed in the shape of a bobby pin. The ends were spread apart to receive the wooden spatula blade.

Basset, in his patent number 3,609,864, teaches a handle with a tube in which a slot is cut for insertion of a scalpel blade holder. The tube fits into the handle and an interior clamping rod sets the holder in the tube at a predetermined attitude. A similar arrangement, albeit less complicated is found in Lundgren patent number 5,055,106.

Gilstrap, in his patent number 5,272,788, discloses a more universal device in which a number of different tools having the same shank configuration are clamped to a handle by tightening a locknut about a key inserted into the handle with the shank in place. Tseng, in patent number 5,664,792, suggests a somewhat different approach in which a clip with spring loaded lugs can be fitted into slots to hold a tool in a handle.

### SUMMARY OF THE INVENTION

The attachment system of the present invention, not unlike many of its predecessors, is developed for a particular line of products manufactured and marketed for Grace Manufacturing. Inc under its MICROPLANE® trademark. There is a woodworking line and a line of kitchen utensils sold under the mark and made by a process which is the subject of Sturtevant et al. patent number 5,100,506. The working elements of these lines of tools comprise graters, scrapers, files, rasps and the like and are exceptionally sharp, and, therefore, must be handled with considerable care.

It is, therefore, a principal objective of the present invention to provide a reusable handle which will accept and hold various exceptionally sharp working elements with great safety to those who use and replace the working elements in the handle.

It is another objective of the present invention to provide a quick attach system for the replacement of sharp working elements of a tool, which system assures secure attachment even while the tool is working under pressure applied in the direction of the plane of attachment.

It is yet another objective of the present invention to provide a novel, quick attachment system in which sharp edges are protected from inadvertent contact with a user's hands, in particular, and his or her body generally.

The foregoing, as well as other objects and advantages of the present invention, will become evident to those skilled in the art when the following detailed description of a preferred embodiment is read in concert with the accompanying drawings, wherein:

### BRIEF DESCRIPTION OF THE DRAWINGS

FIG. 1 is a view, shown in perspective, of a tool having a handle in which a working element has been fitted for use and is being moved along a workpiece to remove a controlled amount of material therefrom;
FIG. 2 is cross sectional view of the tool of FIG. 1, taken along lines 2-2;
FIG. 3 is a top plan view of the tool of FIG. 1;
FIG. 4 is a right side elevation of the tool of FIG. 1;
FIG. 5 is a cross sectional view of the attachment system of the present invention, enlarged to show the details of construction;
FIG. 6 is an exploded view of the tool of FIG. 1, illustrating how the various elements attach and detach from the handle; and
FIG. 7 is a view similar to that of FIG. 1, with the teeth of the working element facing in the opposite direction.

### DETAILED DESCRIPTION OF A PREFERRED EMBODIMENT

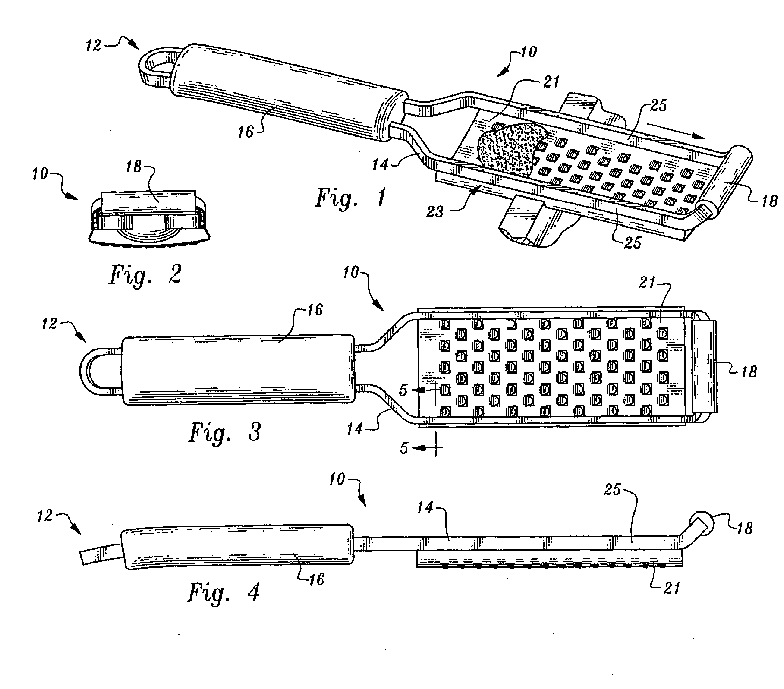

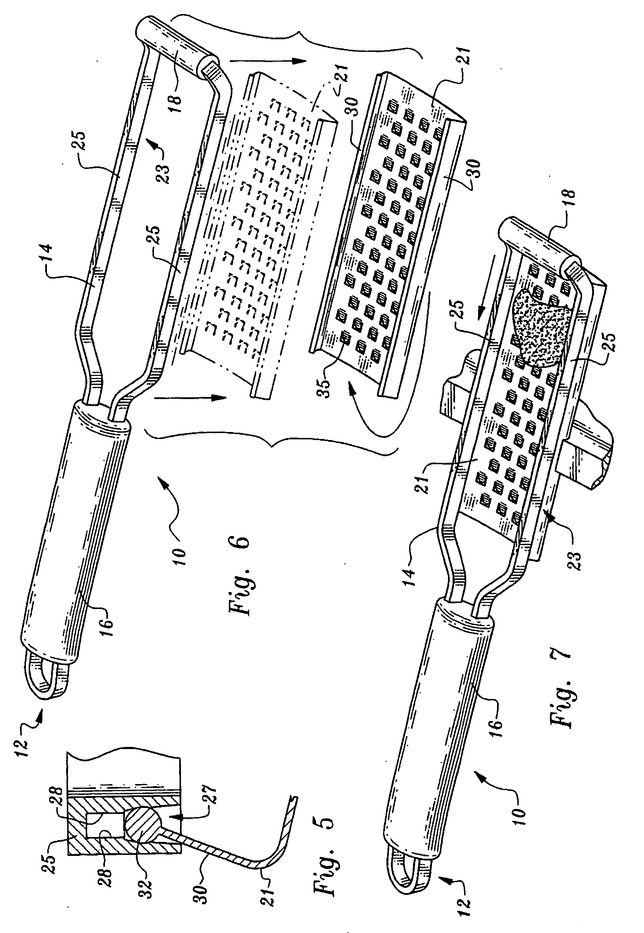

With reference now to the drawings, and initially to FIGS. 1 and 7, a tool 10 is illustrated. The tool 10 comprises a reusable handle 12, which, as shown, has a generally "U" shaped frame 14. A portion of the frame is covered by a grip 16, which is formed of a variety of suitable materials which may be formed to fit comfortably in the hands of a user without the user experiencing undue fatigue.

The frame 14 may be continuous, or closed, or it may be split, in this instance, at the forward end where a forward buffer 18 is provided to assist the user in applying pressure on the frame.

The handle 12 secures a working element 21 which is subject to breakage and/or wear in use. The working element as shown comprises a grater blade for use as a kitchen utensil, it being understood that the invention contemplates a variety of working elements, all of which have a particular purpose, and all of which are exceptionally sharp, and, therefore, must be handled with great care.

The quick attachment system of the present invention provides a means for engaging and disengaging a very sharp working element with both safety and ease. In order to accommodate the working element 21 in the handle in a ready for use attitude, the forward section 23 of the handle 12, perhaps more clearly seen in FIG. 6, is provided with parallel slots, and for this purpose, a pair of parallel rails 25, are conveniently provided. Each rail 25, is formed with a longitudinally extending slot 27. Referring to FIG. 5, it will be seen that the slot 27 tapers inwardly from top, which is the open end of the slot, to bottom, or closed end, of the slot, to facilitate insertion of the working element 21.

The edges 30 of the working element 21 are flanged and, in this embodiment, turned slightly inwardly, as best seen in FIG. 5, and the terminus of each such edge is fitted with an elongated rod 32. The rod is shown as circular in cross section as seen in FIG. 5, and is of a width, in the illustrated case, diameter, which is greater than the width of the slot 27 toward the bottom, while fitting easily into the slot at the top. Accordingly, the rod, which is formed of a material such as plastic, is easily inserted, and wedged, into the slot to hold the working element firmly against inadvertent dislodgement during use.

As further security, protuberances 28 are formed in the slot at the low point and at various places along the longitudinal axis thereof to enhance engagement of the inserted rod and to provide a sensual response to the engagement of the rods in the slots. The rod also serves the salutary purpose of protecting the sharp edge of the working element against inadvertent and unintended contact with the user of the tool.

The working element is easily removed when it becomes worn, or the user wishes to replace the working element in the handle for any reason. This may be accomplished by pushing down on the working element at or near an end thereof. It will also be understood that the specific shape of the rod in cross section may vary from circular, as long as it meets the parameters specified for it.

Referring to FIGS. 1 and 7, it will be seen that the teeth 35 formed in the working element 21 may face fore or aft to accommodate the needs of the user without impairing the operation of the tool 10, and the working element remains firmly in place during use and until it is desired to remove or replace it for any reason.

Having now described a preferred embodiment of the present invention, it will be appreciated that some variation in the structure is well within the contemplation of the invention. With that in mind, what is claimed is:

## Claims

1. A tool having a handle; said handle having a frame, said frame having a pair of parallel rails;
a working element, said working element having flanged edge portions, said edge portions having rods attached thereto;
slots formed in said rails, said slots adapted to receive said rods therein in wedging relation.

2. The tool of Claim 1, wherein said slots are tapered from top to bottom.

3. The tool of Claim 1, wherein said slots are provided with protuberances along the longitudinal axis thereof.

4. The tool of Claim 1, wherein said rods are cylindrical and extend for the length of said edge portions.

5. The tool of Claim 1, wherein a forward buffer is provided.

6. The tool of Claim 2, wherein said slots are provided with protuberances along the longitudinal axis thereof.

7. The tool of Claim 2, wherein said rods are cylindrical and extend for the length of said edge portions.

8. A quick attach system for a tool having a working element which is subject to breakage and wear, comprising a handle for grasping by a user of the tool;
at least two slots in said handle, said slots being spaced apart, and being parallel to one another;
a working element, said working element having a pair of edges, said edges being parallel and spaced apart from one another;
a protective member fitted to said edges and having a dimension greater than the said edge to which it is fitted;
said slots being tapered and having a portion thereof which is of lesser dimension than said protective member so that said protective member may be wedged into said slots to fix said working element to said handle.

9. The quick attach system of Claim 8, wherein said slots are tapered from top to bottom.

10. The quick attach system of Claim 8, wherein said slots are provided with protuberances along the longitudinal axis thereof.
